Europäisches Patentamt

European Patent Office

Office européen des brevets

(19)

(11) EP 0 744 744 A2

(12) EUROPEAN PATENT APPLICATION

(43) Date of publication:
27.11.1996 Bulletin 1996/48

(51) Int Cl.⁶: **G11B 25/04**, G11B 17/038

(21) Application number: 96303716.3

(22) Date of filing: 24.05.1996

(84) Designated Contracting States:
DE FR GB

(30) Priority: 25.05.1995 JP 126533/95
08.06.1995 JP 142073/95

(71) Applicant: HITACHI, LTD.
Chiyoda-ku, Tokyo 101 (JP)

(72) Inventors:
• Hanada, Kazuyoshi
  Hadano-shi (JP)
• Amano, Hideaki
  Odawara-shi (JP)
• Shimosaka, Hideaki
  Nakaharashimojuku, Hiratsuka-shi (JP)
• Kawaguchi, Daisuke
  Totsuka-ku, Yokohama-shi (JP)
• Beppu, Osamu
  Singapore 0512 (SO)
• Okazaki, Toshihisa
  Odawara-shi (JP)
• Yamaura, Satoru
  Odawara-shi (JP)
• Noto, Toshizo
  Minamiashigara-shi (JP)
• Kamada, Minoru
  Odawara-shi (JP)
• Eguchi, Emi
  Yokohama-shi (JP)
• Sakata, Tomoaki
  Hiratsuka-shi (JP)
• Iwasaki, Hiroshi
  Odawara-shi (JP)
• Kuse, Tsutomu
  Odawara-shi (JP)

(74) Representative: Calderbank, Thomas Roger et al
MEWBURN ELLIS
York House
23 Kingsway
London WC2B 6HP (GB)

(54) **Recording disk assembly in which a plurality of magnetic disks are clamped by a shrink fitted or press fitted clamp ring**

(57) A magnetic disk assembly for a magnetic disk recording device includes a plurality of magnetic disks (1); a plurality of spacers (2) respectively disposed between adjacent magnetic disks (1) of the plurality of magnetic disks; a hub (5) including a flange (4) on which the plurality of magnetic disks (1) are placed; and a clamp ring (9) fixed onto the hub (5) to clamp the plurality of magnetic disks (1) between the clamp ring (9) and the flange (4). The hub (5) includes an upper end part (3) of an inverted frustum. The clamp ring (9) includes a disk portion (7) having a center hole (6) of an inverted frustum of which included angle is the same as that of the foregoing inverted frustum upper end part (3) of the hub (5). In addition, the clamp ring (9) includes an outer peripheral wall (8) extending downward of an outer periphery of the disk portion (7) to clamp the plurality of magnetic disk (1) between the clamp ring (9) and the flange (4), and the disk portion (7) is fixed to the hub (5) by shrink-fitting with the upper end part (3) and the center hole (6).

FIG. 2

## Description

The present invention relates to a magnetic disk assembly for a magnetic disk recording device. More particularly, the present invention relates to a magnetic disk assembly in which a plurality of magnetic disks are clamped by a shrink fitted or press fitted clamp ring.

As described in Japanese Patent Laid-Open Publication NO. 6-162709, a magnetic disk assembly is generally constructed such that a plurality of magnetic disks are mounted on a hub in the spaced relationship with each other through spacers and are clamped by a clamper as one unit and data are recorded and reproduced by a magnetic head while the magnetic disks are rotated at a high speed. In the magnetic disk assembly, the clamper is urged against an inner peripheral portion of the uppermost magnetic disk and is screwed on an upper surface of the hub with a plurality of screws so that the magnetic disks are clamped between the clamper and a lower portion of the hub and fixed to the hub as one unit. Therefore, the clamper needs a certain thickness for screwing and a space for accommodating heads of the screws is required. As a result, the thickness of the clamper and the space obstruct thinning of the magnetic disk assembly. Further to maintain flatness of the magnetic disks, tightening forces of the plurality of screws must be adjusted so as to be uniform with each other. As a result, assembling operation becomes laborious.

In addition, as described above, it is necessary that the hub has a certain thickness because of formation of female threaded holes. Thus, the weight and the size of the hub are increased, the running life of bearings for rotatably supporting the hub is unavoidably shortened, and moreover, the load at starting of a motor is increased

To eliminate the foregoing drawbacks, a magnetic disk assembly is constructed such that a clamper having a ring shape is shrink-fitted on a hub and a plurality of magnetic disks are clamped in the axial direction of the hub and fixed to the hub is proposed in, e.g., U.S. Patent NO. 4639802.

In this magnetic disk assembly, the clamp ring is heated so that its inner diameter is enlarged in excess of an outer diameter of the hub and it is conveyed to a predetermined position of the hub, and while the hub is maintained with a condition in which a predetermined magnitude of load is applied in the axial direction of the hub, the clamp ring is cooled and fixed to the hub. With this structure, however, as described above, when the clamp ring is shrink-fitted to the hub, the load is continuously applied in the axial direction of the hub until the clamp ring is fixed onto the hub. Thus, there does appear a problem that it takes a long time until assembling is completed, resulting in low productivity. Since the clamp ring is shrink-fitted to a cylindrical surface of the hub, when the clamp ring is loosened for some reason after completion of the assembling, there appears a problem that the force for clamping the magnetic disks perfectly disappear.

The present invention has been made in consideration of the aforementioned background.

An object of the present invention is to provide a magnetic disk assembly which has no necessity for imparting a certain load to a clamp ring in an axial direction of a hub when the clamp ring is shrink-fitted to the hub, requires a short assembling time and has high productivity.

Other object of the present invention is to provide a magnetic disk assembly which assures that the force of clamping the magnetic disks does not vary or is merely reduced but does not disappear even though the clamp ring is loosened after assembled.

A first embodiment of a magnetic disk assembly according to the present invention, comprises a plurality of magnetic disks; a plurality of spacers respectively disposed between adjacent disks of said plurality of magnetic disks; a hub including an upper end part of an inverted frustum and a flange on which said plurality of magnetic disks are placed; and a clamp ring including a disk portion having a central hole of an inverted frustum of which included angle is the same as that of said upper end part of said hub and a peripheral wall extending downward from an outer periphery of the disk portion to clamp the plurality of magnetic disks with the flange of the hub, the clamp ring being fixed to the hub by shrink-fitting with the upper end part and the central hole.

A second embodiment of a magnetic disk assembly according to the present invention, comprises a plurality of magnetic disks; a plurality of spacers respectively disposed between adjacent magnetic disks of said plurality of magnetic disks, a cylindrical hub including a flange on which the plurality of magnetic disks are placed and a peripheral groove formed at an upper end part thereof; and a clamp ring including a flexible disk portion having a center hole having an inner diameter smaller than that of the peripheral groove of the hub formed thereon and a peripheral wall extending downward from an outer periphery of the disk portion to clamp the plurality of magnetic disks between the clamp ring and said flange of the hub, the clamp ring being such that a height of the peripheral wall from the disk portion is larger than the distance between the peripheral groove and the plurality of magnetic disks, and the clamp ring being fixed to the hub by shrink-fitting with the center hole and the peripheral groove.

Preferably, the first and second embodiments further include an annular shim of low heat conductivity arranged between the peripheral wall of the hub and the uppermost magnetic disk of the plurality of magnetic disks.

A third embodiment of a magnetic disk assembly according to the present invention, comprises a plurality of magnetic disks; a plurality of spacers respectively disposed between adjacent magnetic disks of said plurality of magnetic disks, a cylindrical hub including a flange on which the plurality of magnetic disks are placed; and a clamp ring including an outer ring and a wedge ring, the outer ring including a disk portion having a center hole of an inverted frustum and a peripheral wall extending downward from an outer periphery of the disk portion to clamp the plurality of magnetic disks between the clamp ring and the flange of the hub, the wedge ring including a cylindrical inner surface having substantially the same inner diameter as an outer diameter of the hub and an outer peripheral surface of an inverted frustum shape of which an included angle is substantially the same as that of the center hole, and the wedge ring being press-fitted between the hub and the center hole

A fourth embodiment of a magnetic disk assembly according to the present invention, comprises a plurality of magnetic disks; a plurality of spacers respectively disposed between adjacent magnetic disks of said plurality of magnetic disks; a cylindrical hub having a flange on which the plurality of magnetic disks placed; and a clamp ring including an outer ring and a wedge ring, the outer ring including a center hole of a frustum, the wedge ring having a cylindrical inner surface having substantially the same inner diameter as an outer diameter of the hub and an outer peripheral surface of a frustum shape of which included angle is substantially the same as that of the center hole, the wedge ring being press-fitted between the hub and the center hole so as to clamp the plurality of magnetic disks between the clamp ring and the flange of the hub.

It is preferable that the wedge ring has a slit.

Further, it is preferable that a complementary step for determining a quantity of press-fitting of the wedge ring is formed on the outer peripheral surface of the wedge ring and the inner peripheral surface of the clamp ring.

In the fourth embodiment, an inclination angle of a side surface (generatrix) of the frustum relative to an axis of the hub and a frictional coefficient between the edge ring and the outer ring satisfies the relationship as represented by the following relation,

$$\tan \theta \leq \mu$$

where $\theta$ : inclination angle of the side surface of the frustum relative to the axis of the hub, and

$\mu$ : frictional coefficient between the wedge ring and the outer ring.

In the drawings
Fig. 1 is a vertical sectional view of a first embodiment of a magnetic disk assembly according to the present invention.

Fig. 2 is a fragmentary enlarged sectional view of the magnetic disk in a section A in Fig. 1.

Fig. 3 to Fig. 7 are fragmentary sectional views similar to Fig. 2, showing modified forms of the first embodiment, respectively.

Fig. 8 is an enlarged sectional view of a second embodiment of a magnetic disk assembly according to the present invention and similar to Fig. 2.

Fig. 9 is a fragmentary sectional view of a third embodiment of a magnetic disk assembly according to the present invention and similar to Fig. 2.

Fig. 10 is a vertical sectional view of a modified form of the third embodiment of the magnetic disk assembly according to the present invention.

Fig. 11 is an enlarged sectional view similar to Fig. 2, and showing a modified form of the wedge ring used in the third embodiment of the present invention.

Fig. 12 is a perspective view of another modified form of the wedge ring used in the third embodiment of the present invention.

Fig. 13 is a vertical sectional view of a fourth embodiment of a magnetic disk assembly according to the present invention.

Fig. 14 is a vertical sectional view showing a method of assembling the fourth embodiment of the present invention.

Fig. 15 is a fragmentary enlarged sectional view of a section B in Fig. 13, and for explaining a relationship between an inclination angle of a side surface of the frustum relative to the axis of the hub and a coefficient of friction between the wedge ring and the outer ring.

Fig. 16 is an enlarged sectional view similar to Fig. 2, showing the structure for disassembling the magnetic disk of the present invention.

Fig. 17 is a plan view of the structure shown in Fig. 16.

Fig. 18 is an enlarged view similar to Fig. 2, showing another structure for disassembling the magnetic disk assembly of the present invention.

Fig. 19 is a plan view of the structure shown in Fig. 18.

Fig. 20 is a fragmentary sectional view of the magnetic disk assembly similar to Fig. 2, showing other structure for disassembling the magnetic disk assembly of the present invention.

Fig. 21 is a sectional view of a hard disk unit in which the magnetic disk assembly of the invention is incorporated.

Fig. 22 is a top plan view of the hard disk unit shown in Fig. 21 and in which a top surface of a cover is omitted for clearly showing the inside of the unit.

The present invention will now be described in detail hereinafter with reference to the accompanying drawings which illustrate preferred embodiments thereof.

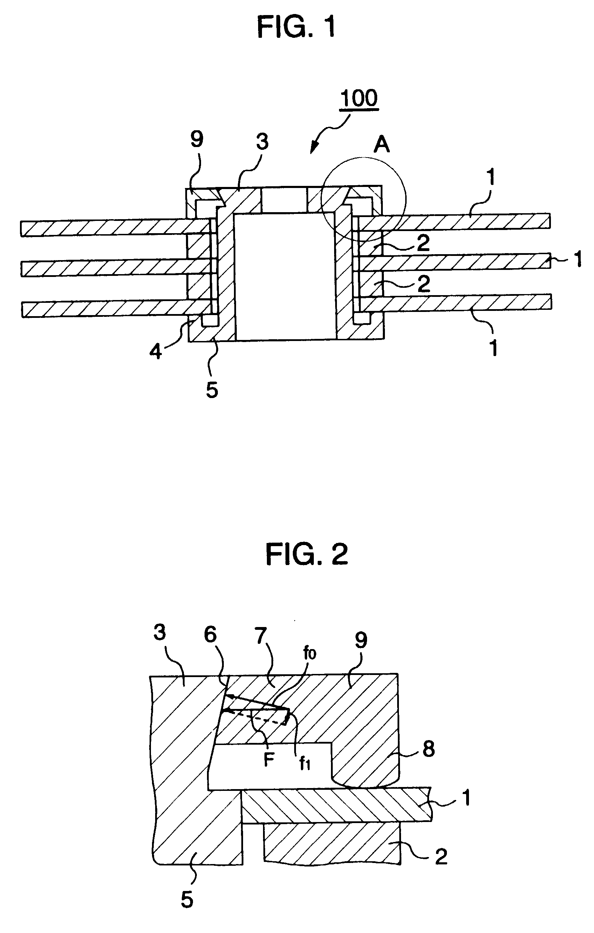

Referring to Fig. 1 and Fig. 2, a first embodiment of a magnetic disk assembly according to the present invention is shown. The magnetic disk assembly 100 includes a hub 5 which is supported on a spindle for a magnetic disk recording apparatus (not shown) through bearings. The hub 5 is substantially a hollow cylinder, and is provided at a lower part with a flange on which a plurality of magnetic disks 1 are mounted the plurality of magnetic disks 1 are fitted onto the hub 5. An annular spacer 2 is disposed between adjacent magnetic disks 1, and the plurality of magnetic disks 1 are arranged in the equally spaced relationship in an axial direction of the hub 5. A clamp ring 9 is fixedly attached to an upper part 3 of the hub 5 to clamp the plurality of magnetic disks 1 between the flange 4 of the hub 5 and the clamp ring 9 in the axial direction of the hub 5 with a predetermined force. With this construction, the plurality of magnetic disks 1 are made as one unit with the hub 5.

The upper part 3 of the hub 5 has an inverted frustum.

As shown in Fig. 2, the clamp ring 9 includes a disk part 7 and an outer peripheral wall 8 extending downward from an outer periphery of the disk portion 7. The outer peripheral wall 8 abuts against the uppermost magnetic disk of the plurality of magnetic disks and clamps the plurality of magnetic disks with the flange 4 of the hub 5 in the axial direction of the hub 5. A surface of the outer peripheral wall 8 in contact with the magnetic disk 1 is rounded. A central hole 6 is formed in the disk portion 7. The central hole 6 is an inverted frustum shape having the same side inclination angle as that of the inverted frustum upper part 3 of the hub 5. In other words, an included angle of the inverted frustum central hole 6 is substantially the same as that of the inverted frustum upper part of the hub 5.

The central hole 6 of the clamp ring 9 is shrink-fitted onto the upper part 3 of the hub 5 with a predetermined shrinking interference. More specifically, the central hole 6 of the clamp ring 9 prior to shrink-fitting exhibits, in the condition in which the peripheral wall 8 comes in contact with the uppermost magnetic disk 1 as shown in Fig. 2, an inverted frustum hole smaller than the inverted frustum of the upper part 3 of the hub 5 by a quantity of shrink-fitting interference.

The clamp ring 9 is heated and expanded to an extent that the smallest diameter portion of the inverted frustum hole 6 thereof becomes larger than the maximum diameter of the inverted frustum upper part 3 of the hub 5 and is fitted onto the upper part 3 of the hub 5 so that the peripheral wall 8 comes in contact with the uppermost disk 1. Thereafter, as the clamp ring 9 is cooled, the central hole 6 of the clamp ring 9 is contracted, the clamp ring 9 is fixed on the upper end part 3 of the hub 5. At this time, a radial contractive force F is generated on the clamp ring 3. This radial contractive force F is decomposed into a fixing force $f_0$ and a downward force $f_1$ as shown in Fig. 2 by cooperative actions of the inverted frustum upper end part 3 the inverted frustum central hole 6. The downward force $f_1$ serves as a clamping force for clamping the magnetic disks 1 between the peripheral wall 8 and the flange 4.

According to this embodiment, it is not needed that a downward urging force is continuously exerted on the clamp ring 9 during cooling of the clamp ring 9 and necessary fixing force and clamping force are obtained merely by fitting the heated clamp ring 9 onto the upper end part 3 of the hub 5, and therefore a magnetic disk assembly can be obtained at high productivity. Besides even though the shrink-fitted state of the clamp ring 9 onto the hub 5 is loosened for some reason, there do not arise a malfunction that the clamp ring 9 is disconnected from the hub 5 owing to the cooperative actions of the inverted frustum upper end part 3 and the inverted frustum center hole 6. The result is merely that the magnetic disk clamping force is slightly reduced although it depends on the extent of the loosening.

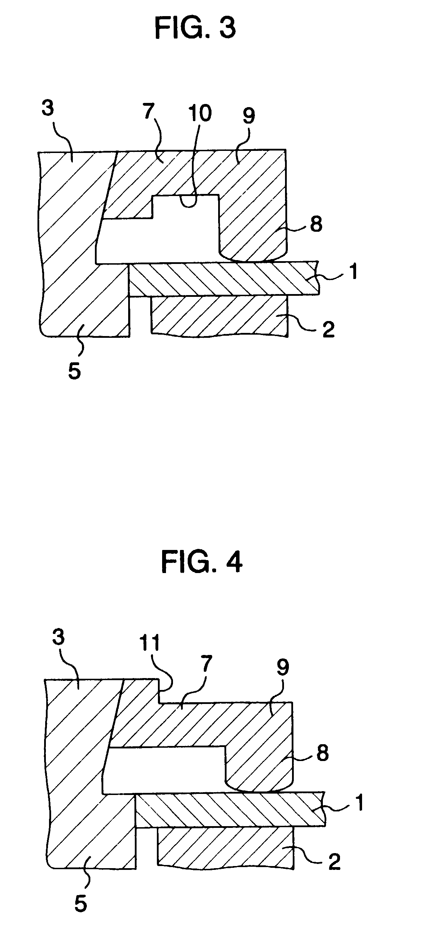

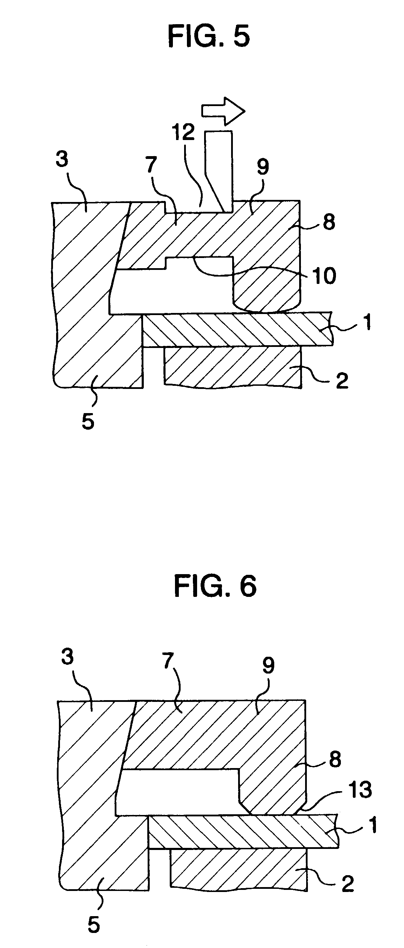

Fig. 3 to Fig. 5 show modified forms of the first embodiment of the present invention. In the modified form shown in Fig. 3, an annular groove 10 is formed on the lower surface of the disk portion 7 of the clamp ring 9, in the modified form shown in Fig. 4, an annular groove 11 is formed on the upper surface of the disk portion 7 of the clamp ring 9, and in the modified form shown in Fig. 5, annular grooves 12 and 10 are formed on the upper surface and the lower surface of the disk portion 7 of the clamp ring 9. The formation of these annular grooves is intended to give the disk portion 7 some flexibility. In each of the modified forms, the disk portion 7 of the clamp ring 9 is deflected by the downward force $f_1$ caused by the shrink-fitting and the clamp ring 9 is fixed onto the hub 5 in the deflected state. In other words, the plurality of magnetic disks 1 are elastically clamped. Therefore, even though the shrink-fitted state of the clamp ring 9 onto the hub 7 is loosened for some reason, the result is merely that a quantity of deflection of the disk portion 7 of the clamp ring 9 is reduced although it depends on the extent of the loosening, and the influence of the loosening to the magnetic disk clamping force can be further reduced.

In the first embodiment, a surface of the peripheral wall 8 in contact with the uppermost magnetic disk 1 is rounded but as shown in Fig. 6, both corner edges of the peripheral wall 8 at the lower end may be chamfered. In this case, machining of the clamp ring 9 can be simplified compared with the case that the contact surface is rounded.

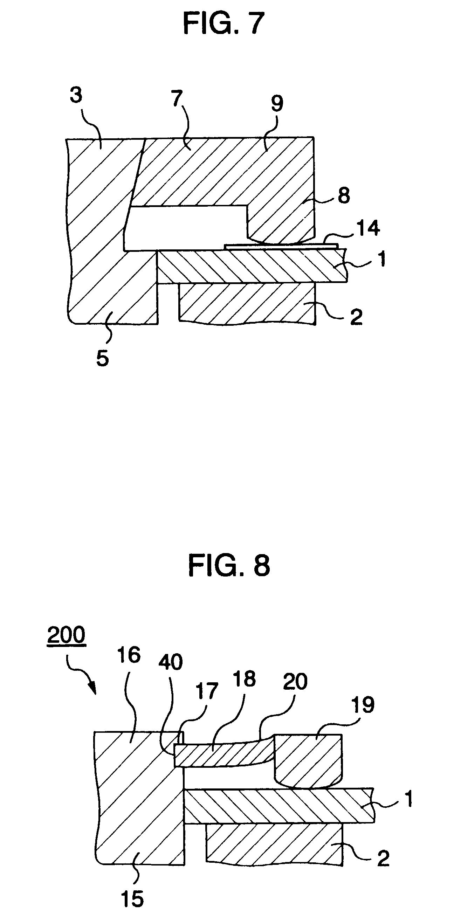

In the case that the clamp ring 9 has a large interference for shrink-fitting, it is necessary that the heating temperature of the clamp ring 9 is elevated so as to allow the center hole 6 to be further enlarged. In this case, as shown in Fig. 7, to avoid the thermal influence to the magnetic disk, it is preferable that an annular shim having low thermal conductivity such as a stainless steel is disposed between the contact surface of the peripheral wall 8 and the magnetic disk 1.

Next, a second embodiment of a magnetic disk assembly according to the present invention will be described with reference to Fig. 8.

Since the fundamental structure of the second embodiment is the same as that of the first embodiment, only different points will be described below. A hub 15 is substantially hollow cylindrical, and an annular groove 17 is formed at an upper part of the hub 15. A clamp ring 18 includes a flexible disk portion 20 and a peripheral wall 19 extending downward from an outer periphery of the disk portion 20. A height of the peripheral wall 19 from the disk portion 20 is larger than the distance between the uppermost magnetic disk 1 and the peripheral groove 17. A center hole 40 is formed in the disk portion 20, and an inner diameter of the center hole 40 is smaller than an inner diameter of the peripheral groove 17. With a condition in which the peripheral wall 19 comes in contact with the uppermost magnetic disk 1 and the disk portion 20 is deflected, the disk portion 20 is shrink fitted into the peripheral groove 17. A reactive force induced by the deflection of the disk portion 20 serves as a magnetic clamping force.

In the second embodiment, since the clamp ring 18 is shrink-fitted into the peripheral groove 17 formed at the upper end part of the hub 15, there do not arise malfunctions that the clamp ring 18 is diskonnected from the hub 15 due to loosening of the shrink-fitted state, and moreover, the clamping force to clamp the magnetic disks is not reduced.

Since a magnitude of magnetic disk clamping force is determined based on a height of the peripheral wall 19 from the disk portion 20, a distance between the uppermost magnetic disk 1 and the peripheral groove 17 and an elastic modulus of the disk portion 20, the second embodiment provides an especially effective structure for the magnetic disk assembly including a few magnetic disks in which the variation of the distance between the uppermost magnetic disk 1 and the peripheral groove 17 due to accumulation of the dimensional tolerances of the disks and the spacers is small.

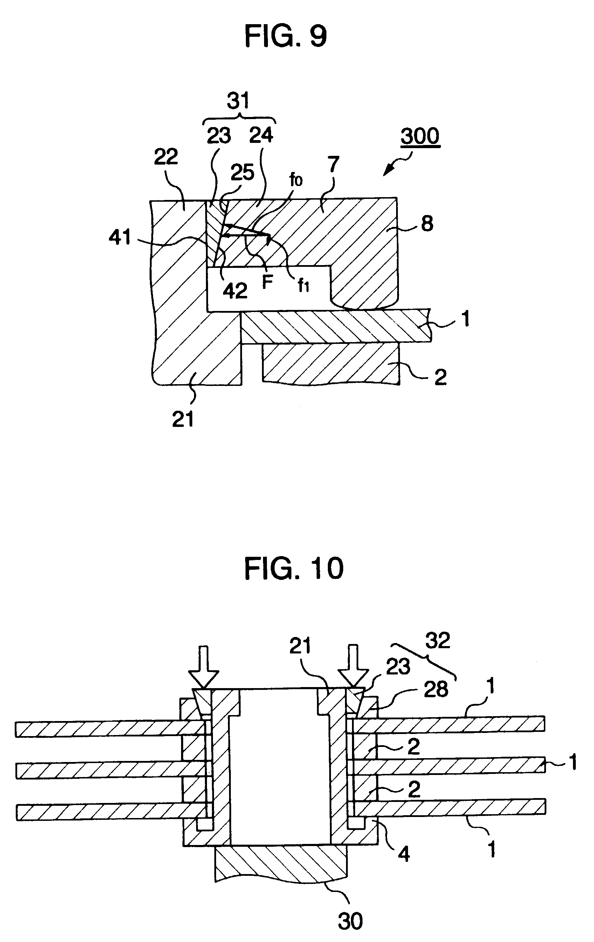

Next, a third embodiment of a magnetic disk assembly according to the present invention will be described below with reference to Fig. 9.

Since the fundamental structure of the magnetic disk assembly is the same as that of the first embodiment, only different points will be described below. A hub 21 is substantially hollow cylindrical. A clamp ring 31 is fixed to an upper end part 22 of the hub 21, and a plurality of magnetic disks 1 are clamped between the clamp ring 31 and the flange 4 (not shown) in an axial direction of the hub 21 with a predetermined force. Thus, the plurality of magnetic disks 1 are made as one unit with the hub 21.

The clamp ring 31 includes an outer ring 24 and a wedge ring 23. The outer ring 24 includes a disk portion 7 and a peripheral wall portion 8 extending downward from an outer periphery of the disk portion 7, and an inverted frustum center hole 25 is formed in the disk portion 7. The peripheral wall 8 of the outer ring 24 is in contact with the uppermost magnetic disk 1. The wedge ring 23 includes a cylindrical inner peripheral surface 41 having an outer diameter substantially the same as that of the upper end part 22 of the hub 21 and an outer peripheral surface 42 of an inverted frustum having the same inclination angle as that of a side surface of the center hole 25. In other words, the inverted frustum of the outer side surface of the wedge ring 23 has an included angle the same as that of the inverted frustum of the center hole 25. The wedge ring 23 is press-fitted between the center hole 25 of the outer ring 24 and the upper end part 22 of the hub 21 with a predetermined interference.

The fixing of the clamp ring 31 to the hub 21 is effected by disposing the outer ring 24 in a state wherein the peripheral wall 8 comes into contact with the uppermost magnetic disk 1 and press-fitting the wedge ring 23 between the center hole 25 and the upper end part 22 of the hub 21. Alternatively, it is effected in such a manner that the outer ring 24 is disposed in a state wherein the peripheral wall 8 comes into contact with the uppermost magnetic disk 1, the periphery of the center hole 25 of the outer ring 24 is urged downwardly so as to deflect the disk portion 7 in the downward direction to enlarge the center hole 25, the wedge ring 23 is inserted between the enlarged center hole 25 and the upper end part 23 of the hub 21, and downward urging toward the outer ring 24 is released. As a result, a contractive force F in the radial direction is generated in the outer ring 24. This contractive force F in the radial direction is decomposed of a fixing force $f_0$ and a downward force $f_1$ by the cooperative actions of the inverted frustum center hole 25 and the inverted frustum outer peripheral surface 42 as shown in Fig. 9. This downward force $f_1$ serves as a clamping force to the magnetic disks 1 with the flange 4. Frictional force is generated between the outer ring 24 and the wedge ring 23 in the presence of the fixing force $f_0$ so that the outer ring 24 and the wedge ring 23 are frictionally fixed to each other. In addition, another frictional force is generated between the wedge ring 23 and the hub 21 in the presence of the contractive force F in the radial direction so that the wedge ring 23 and the hub 21 are fixed to each other. As a result, the clamp ring 31 clamps the plurality of magnetic disks 1 with the flange 4 and is fixed on the hub 21.

As shown in Fig. 10, the outer ring may be in the form with the peripheral wall 8 omitted. With this structure, an advantage is such that the outer ring 28 is simply constructed. The outer ring 28 has no flexibility but the magnetic disks 1 can elastically be clamped by making the flange 4 of the hub 21 flexible.

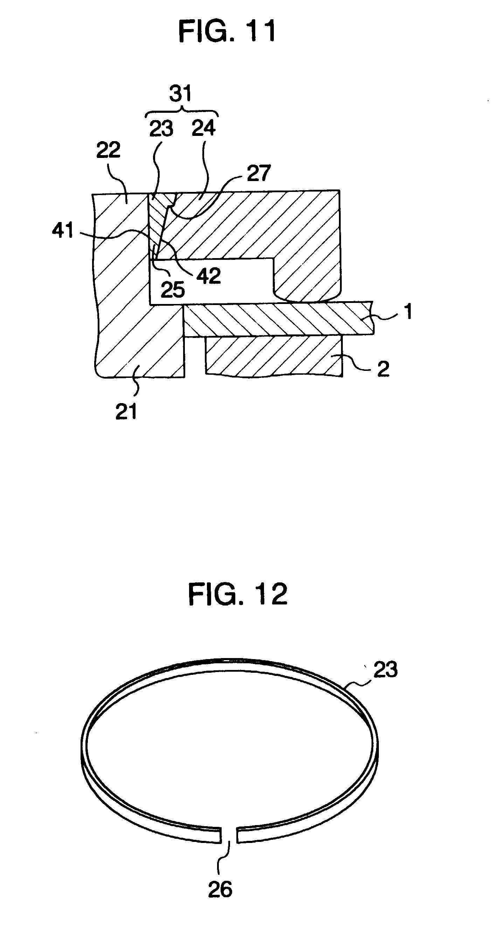

As shown in Fig. 11, a complemental step 27 for determining a quantity of insertion of the wedge ring 23 may be provided between the outer peripheral surface 42 of the wedge ring 23 and the center hole 25 of the outer ring 24. With this structure, since the wedge ring 23 is press-fitted merely by a predetermined quantity between the upper end part 22 of the hub 21 and the center hole 25 of the outer ring 24, it can prevent the magnetic disk clamping force of the outer ring 24 from being excessively increased. In other words, flexible deformation of the magnetic disks can be prevented.

As shown in Fig. 12, it is preferable that the wedge ring 23 has a slit 26. The provision of the slit 26 in the wedge ring 23 increases conformability of the wedge ring 23 to the contractive force of the outer ring 24 in the radial direction, and this assures that the wedge ring 23 is reliably fixed to the upper end part 22 of the hub 21.

According to this embodiment, when the clamp ring is fixed to the hub, there is no necessity of heating and cooling the clamp ring. Thus, an assembling operation is completed for a short time, and a magnetic disk assembly is obtained at high productivity. In addition, no consideration is placed on the thermal influence.

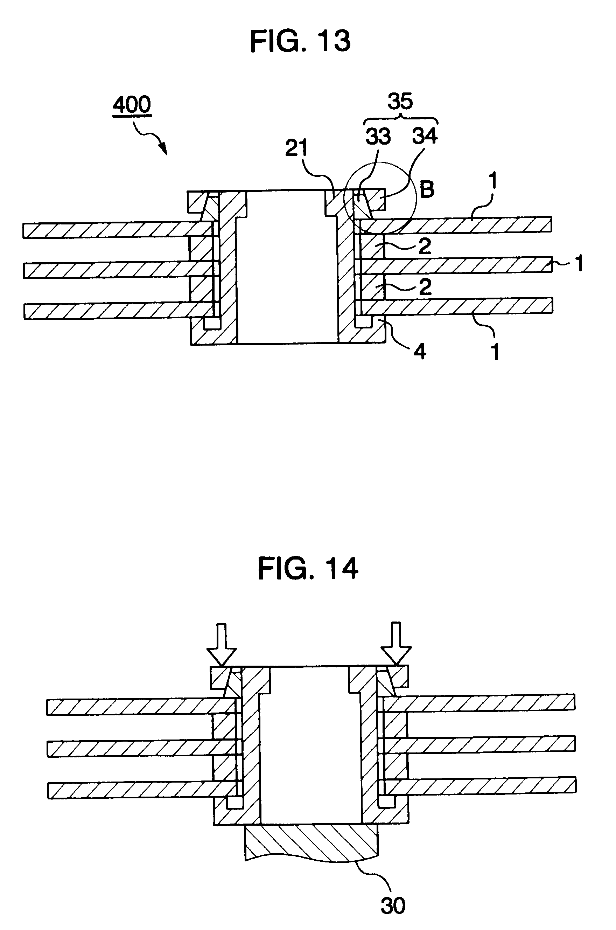

Next, a fourth embodiment of a magnetic disk assembly according to the present invention will be described below with reference to Fig. 13 to Fig. 15.

Since the fundamental structure is the same as that of the modified form of the third embodiment of the present invention, description will be made below merely as to different points. A clamp ring 35 includes an outer ring 34 and a wedge ring 33. The outer ring 34 includes a center hole 44 having a frustum shape. The wedge ring 33 includes a cylindrical inner periphery surface 41 having the substantially the same inner diameter as the outer diameter of the upper end part 22 of the hub 21 and an outer peripheral surface 43 of a frustum shape having the same inclination angle as that of a side surface of the frustum center hole 44. In other words, the frustum of the outer peripheral surface 43 of the wedge ring 33 has the same included angle as that of the frustrum of the center hole 44.

Fixing of the clamp ring 35 to the hub 31 is effected by fitting the wedge ring 33 onto a hub 21 to come into contact with the uppermost magnetic disk 1, engaging the frustum center hole 44 of the outer ring 34 with the frustum outer peripheral surface 43 of the wedge ring 33, and urging the outer ring 34 in the downward direction so as to allow the wedge ring 33 to be press-fitted between the hub 21 and the frustum center hole 44. As a result, the wedge ring 33 is fixed to the upper end part of the hub 21 and urged in the downward direction so as to clamp the magnetic disks 1 with the flange 4.

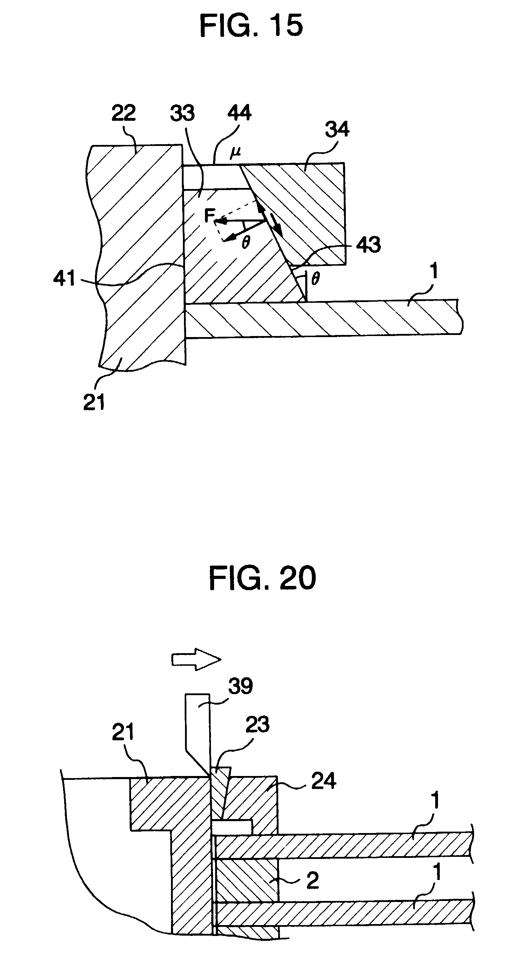

Conditions for prohibiting the outer ring 34 from being disengaged from the wedge ring 33 will be described below with reference to Fig. 15. When the outer ring 34 is squeezed onto the wedge ring 33, a reactive force F is generated in on the outer ring 34. An upward component of the reactive force F, i.e., a force for disengaging the outer ring 34 is represented by F • sin θ, wherein an inclination angle of a side surface of the frustum is represented by θ. On the other hand, a frictional coefficient between the wedge ring 33 and the outer ring 34 is represented by μ, and a frictional force acting between the wedge ring 33 and the outer ring 34 is represented by μ • F • cos θ. To assure that the outer ring 34 is diskonnected from the wedge ring 33, the outer ring diskonnecting force should be smaller than the frictional force. Accordingly, the following equation is established.

$$F \bullet \sin\theta \le \mu \bullet F \bullet \cos\mu$$

$$\tan\theta \le \mu$$

In this embodiment, the frustum inclination angle θ is set to such a value that the foregoing conditions are satisfied.

It should be noted that, also in this embodiment, a complemental step 27 and a slit 26 for the wedge ring employed for the third embodiment of the present invention may be provided.

Also in this embodiment, since it is not necessary that the clamp ring is heated and cooled when the clamp ring is fixed to the hub like in the third embodiment, an assembling operation is completed for a short time and a magnetic disk assembly is obtained at a high productivity. In addition, no consideration is placed on the thermal influence.

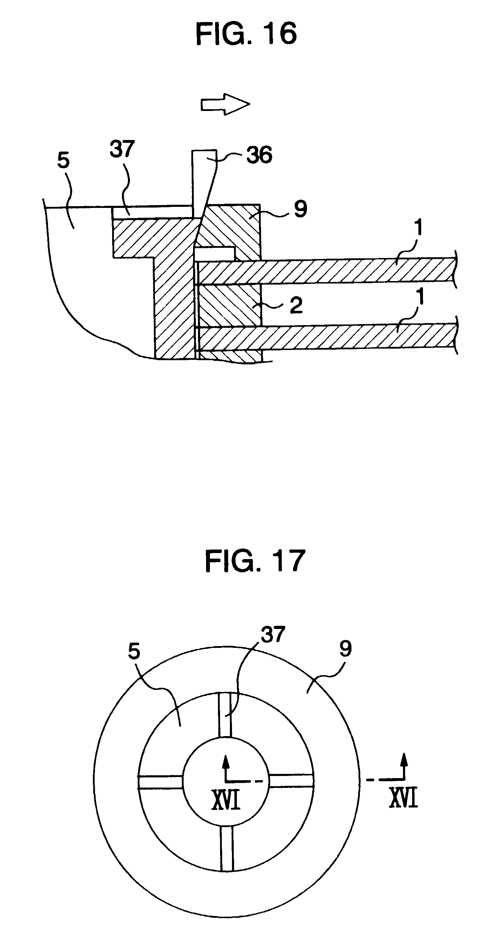

Next, disassembling of the magnetic disk assembly according to the invention will be described below with reference to Fig. 16 to Fig. 20. Fig. 16 and Fig. 17 shows a case in which a manner of disassembling of the magnetic disk assembly of the present invention is applied to the first embodiment. As shown in Fig. 16, a plurality of recesses through which a disassembling tool is insertable are formed on an upper end surface of the hub 5.

When the disassembling tool 36 is inserted into the recess 37 and then displaced in the radial direction as represented by an arrow mark, the dissembling tool 36 enlarge the clamp ring 9 to bring the clamp ring 9 out of the contact state. Thus, it becomes possible to disassemble the magnetic disk assembly. It should be noted that this structure is applicable to the second embodiment, the third embodiment, and the fourth embodiment.

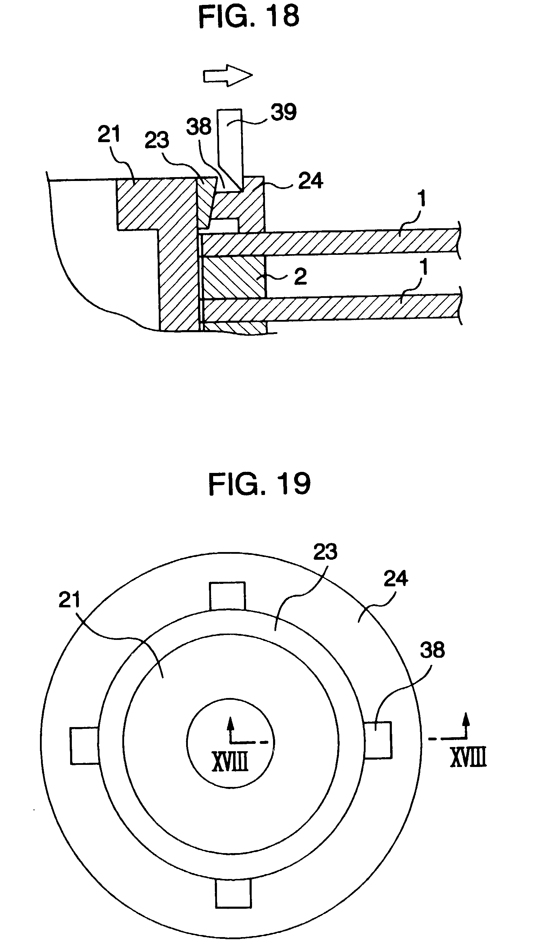

Fig. 18 and Fig. 19 shows a case in which a manner of disassembling the magnetic disk assembly according to the invention is applied to the third embodiment. A plurality of recesses 38 into which a disassembling tool is insertable are formed on an upper surface of the outer ring 24.

When the disassembling tool 39 is inserted into the recess 38 and radially outwardly displaced in the arrow-marked direction, the disassembling tool 36 expands the outer ring 24, so that the wedge ring 23 is released. Therefore, it becomes possible to disassemble the magnetic disk assembly. It should be noted that this structure is applicable to the first embodiment, the second embodiment and the fourth embodiment.

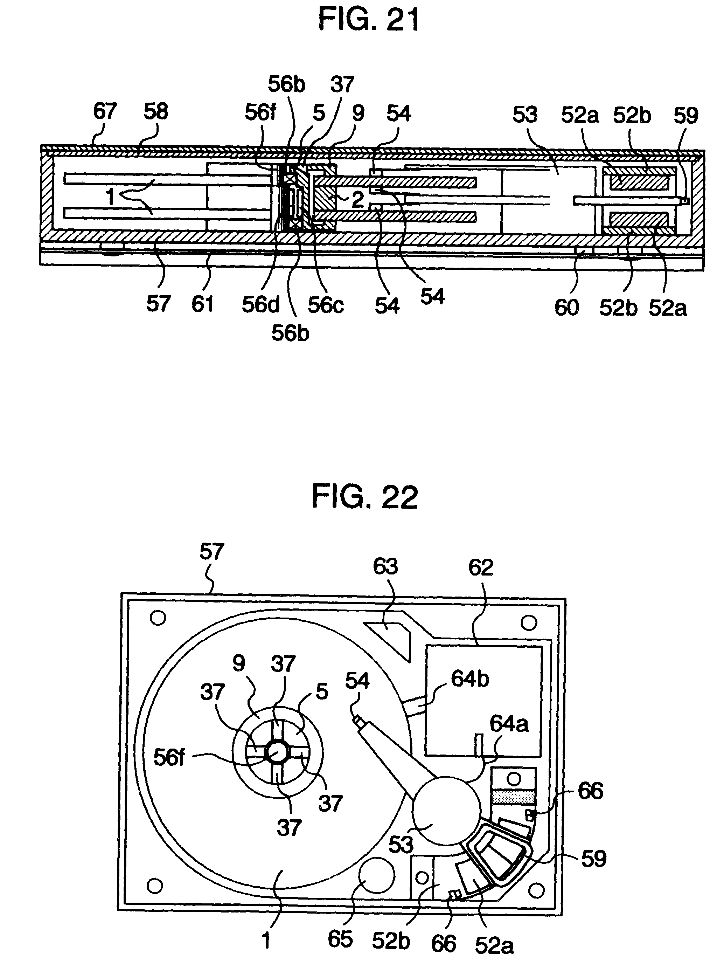

Fig. 20 shows a case in which the disassembling structure of the present invention is applied to the third embodiment. The wedge ring 23 has a length which is projected from an upper end of the hub 21 when the wedge ring 23 is press-fitted between the outer ring 24 and the hub 21. A disassembling tool is engaged to the projected part and radially outwardly displaced as represented by an arrow mark to enlarge the wedge ring 23, causing the hub 21 to be brought out of the fixing.

Thus, the magnetic disk assembly can be disassembled.

According to the present invention, there is no need to continuously apply a load on the clamp ring upon assembling and an assembling operation is completed for a short time. Thus, a magnetic disk assembly can be obtained at very high productivity. Even though the clamp ring is loosened after assembled for some reason, a magnetic disk clamping force is merely reduced but it does not completely disappear.

Next, a hard disk unit including the above-described magnetic disk assembly of the invention will be described with reference to Figs. 21 and 22. A magnetic disk comprises a substrate made of Aluminum or glass and a magnetic film formed on surfaces of the substrate and informations are magnetically recorded on the magnetic disk. In the hard disk unit, a plurality of magnetic disks are installed and drivingly rotated by a spindle motor 56. The spindle motor 56 comprises a motor shaft 56f of which material is stainless steel, motor bearings 56b press-fitted on the shaft at an upper portion and a lower portion, a motor coil 56d fixed on the motor shaft 56f between the motor bearings 56b and permanent motor magnets 56c opposed to the motor coil 56d. A hub 5 of which material is aluminum is rotatably supported by the motor bearings 56b. The permanent motor magnets 56c are fixed on an inner surface of the hub 5 facing the motor shaft 56f so as to form a magnetic circuit with the motor coils 56d. The hub 5 is rotated by applying an electrical current to the motor coil 56d.

The hard disk unit comprises magnetic heads 54 which magnetically read/write informations from/on the magnetic disks 1 in rotation with a constant gap of about 0.1 micron between the magnetic disk and the head, a carriage 53 rotatably supporting the magnetic heads to precisely locate them on the magnetic disks 1 and a voice coil motor 52 including a coil 59, permanent magnets 52a and yokes 52b. The hard disk unit is structured such that the magnetic heads 54 supported by the carriage 53 are located on the magnetic disks by energizing the voice coil motor 52. The yokes 52b are arranged above and below the coils 59. One of the yokes 52b has the permanent magnet 52a of S-pole with respect to the coil 59 and the permanent magnet 52a of N-pole with respect to the coil 59. The magnets 52a and the one of yokes 52b are fixed along an arcuate path on which the coil 59 is rotatingly moved when the magnetic heads 54 are moved on the magnetic disks 1. The magnets 52a and the one of yokes 52b are fixed symmetrically with respect to a center line of an angle region in which the coil 59 is rotatingly moved. On the other of the yokes 52b, another magnet 52a is fixed at a position opposite to said magnet 52a with respect to the coil 59 and the porality of another magnet 52a is reverse to that of the opposing magnet 52a. Thus, to move the carriage 53 and to locate the magnetic heads can be effected by applying an electrical current in the coil 59 between the magnets 52a with controlling an amount of electrical power and a direction of electrical current.

Signals of the magnetic head 54 upon reading/writing are transferred to a read/write control board 62 for controlling the signals of the magnetic head 54 upon reading/writing by a fine wire of the magnetic coil provided on the head 54 and the carriage 53 and a flexible printed board 64a and then are transferred to the outside of the hard disk unit by means of a sealed type connector 60 which is bonded on a base 57 positioned on the lower surface of the read/write control board 62. The base 57 is made of aluminum, stainless steel or iron.

The sealed type connector 60 functions to transmit electrical signals between the inside and the outside of the hard disk unit and comprises a plurality of pins to transmit the signals and molded part for completely sealingly retaining the pins. An electrical current for the coil 59 also is transmitted to the sealed type connector 60 through the flexible printed board 64a.

Further, an electrical current for driving the spindle motor 56 is transmitted to the sealed type connector through a flexible printed board 64b. Where noise due to the motive electrical current for the spindle motor 56 interferes with the signals upon reading/writing, there is a case in which only the motive electrical current for the spindle motor 56 is connected to a separate sealed type connector. The sealed type connector 60 is connected to a circuit board 61 for controlling an apparatus provided on the outside of the hard disk unit.

Further, the hard disk unit includes a stopper 66 for preventing the head 54 from being fallen out of the surface of the disk 1 or from applying damage to the disk 1 due to uncontrolled movement of the carriage 3 when an electrical current more than a predetermined current is applied at an abnormal condition. The motor shaft 56f, a pivot shaft of the carriage 53 and the voice coil motor 52 are fixed on the base 57. A cover 58 made of aluminum, stainless steel or iron is fixed to the base 57 by means of screws. Peripheral portions of holes for screws provided on the cover 58 are recessed so that heads of the screws do not extend beyond an upper surface of the cover 58. A seal 67 made of aluminum film having a thickness to prevent humidity from entering the hard disk unit is bonded on mating surfaces of the base 57 and the cover 58 in order to seal the unit from the outside air.

In an operating condition in which informations are read or written between the magnetic disk and the head, dust must not enter between the disk and the head to obstruct the magnetic field in order to precisely process the signals. An inner filter 63 is provided in the hard disk unit to keep clean the inside of the hard disk unit. The inner filter catches dust which is resulted from air circulation in the hard disk unit caused by the rotation of the disk 1. Further, in order to control the humidity in the inside of the hard disk unit and to absorb the gas in the unit, an air control material 65 is mounted in the unit. The air control material 65 makes the humidity in the inside of the hard disk unit at a constant range and absorbs the gas affecting a contact endurance between the head 54 and the disk 1, thereby improving the reliability of the hard disk unit.

## Claims

1. A magnetic disk assembly for a magnetic disk recording device including;

   a plurality of magnetic disks (1);
   a plurality of spacers (2) respectively disposed between adjacent magnetic disks (1) of said plurality of magnetic disks;
   a hub (5) having a flange on which said plurality of magnetic disks (1) are placed; and
   a clamping ring (9) fixed to said hub (5) and clamping said plurality of disks (1) between said clamp ring (9) and said flange of said hub (5),

   characterized in that

   said hub (5) includes an upper part (3) of an inverted frustum, and
   said clamp ring (9) includes a disk portion (7) having a center hole (6) of an inverted frustum of which included angle is the same as that of said inverted frustum upper part (3) of said hub (5) and an outer peripheral wall (8) extending downward from an outer periphery of said disk portion (7) to clamp said plurality of magnetic disk between said clamp ring (9) and said flange (4) of said hub (5), said clamp ring (9) being fixed to said hub (5) by shrink-fitting with said central hole (6) and said upper part (3).

2. The magnetic disk assembly as claimed in claim 1, characterized in that said magnetic disk assembly further comprises an annular shim (14) having low thermal conductivity and disposed between said peripheral wall (8) of said clamp ring (9) and the uppermost magnetic disk (1) of said plurality of magnetic disks (1).

3. The magnetic disk assembly as claimed in claim 1 or claim 2, characterized in that said disk portion (7) of said clamp ring (9) has flexibility.

4. The magnetic disk assembly as claimed in claim 1 or claim 2, characterized in that a surface of said peripheral wall (8) of said clamp ring (9) in contact with said uppermost magnetic disk (1) of said plurality of magnetic disks (1) is chamfered.

5. The magnetic disk assembly as claimed in claim 1 or claim 2, characterized in that a surface of said peripheral wall (8) of said clamp ring (9) in contact with the uppermost magnetic disk (1) of said plurality of magnetic disk (1) is rounded.

6. The magnetic disk assembly as claimed in claim 1 or claim 2, characterized in that said hub (5) includes, on an upper end surface, a plurality of recesses (37) into which a disassembling tool is insertable.

7. The magnetic disk assembly as claimed in claim 1 or claim 2, characterized in that said clamp ring (9) includes, on an upper surface, a plurality of recesses (38) into which a disassembling tool is insertable.

8. A magnetic disk assembly for a magnetic disk recording device comprising

   a plurality of magnetic disks (1);
   a plurality of spacers (2) respectively disposed between adjacent magnetic disks (1) of said plurality of magnetic disks;
   a cylindrical hub (15) having a flange on which said plurality of magnetic disks (1) are placed; and
   a clamp ring (18) fixed on said hub (15) to clamp said plurality of magnetic disks (1) between said clamp ring (18) and said flange (4) of said hub (15),

   characterized in that

   said hub (15) includes a peripheral groove (17) formed at an upper part (16) thereof; and
   said clamp ring (18) includes a flexible disk portion (20) having a center hole (40) having a diameter smaller than that of said peripheral groove (17) of said hub (15) and a peripheral wall (19) extending downwardly from an outer periphery of said disk portion (20) to clamp a plurality of disks (1) between said clamp ring (18) and said flange (4) of said hub (15), a height of said peripheral wall (19) from said disk portion (20) is larger than the distance between said peripheral groove (17) and said plurality of disks (1), and said clamp ring (18) is fixed to said hub (15) by shrink-fitting with said center hole (4) and said peripheral groove (17).

9. The magnetic disk assembly as claimed in claim 8, characterized in that said magnetic disk assembly further includes an annular shim (14) having low thermal conductivity and disposed between said peripheral wall (19) and the uppermost magnetic disk (1).

10. The magnetic disk assembly as claimed in claim 8 or claim 9, characterized in that a surface of said peripheral wall (19) of said clamp ring (18) in contact with the uppermost magnetic disk (1) of said plurality of magnetic disks (1) is chamfered.

11. The magnetic disk assembly as claimed in claim 8 or claim 9, wherein a surface of said peripheral wall (19) of said clamp ring (18) in contact with the uppermost magnetic disk (1) of said plurality of magnetic disks (1) is rounded.

12. The magnetic disk assembly as claimed in claim 8 or claim 9, characterized in that said hub (15) includes, on an upper end surface, a plurality of recesses (37) into which a disassembling tool is insertable.

13. The magnetic disk assembly as claimed in claim 8 or claim 9, characterized in that said clamp ring (18) includes, on an upper surface, a plurality of recesses (38) into which a disassembling tool is insertable.

14. A magnetic disk assembly for a magnetic disk recording device comprising

> a plurality of magnetic disks (1);
> a plurality of spacers (2) respectively disposed between adjacent magnetic disks (1) of said plurality of magnetic disks;
> a cylindrical hub (21) including a flange (4) on which said plurality of magnetic disks (1) are placed; and .
> a clamp ring (31; 32; 35) fixed to said hub (21) to clamp said plurality of magnetic disks (1) between said clamp ring and said flange (4) of said hub (21),

characterized in that
    said clamp ring (31; 32; 35) includes an outer ring (24; 28; 34) having a center hole (25, 44), and a wedge ring (23; 33) press-fitted between said hub (21) and said center hole (25; 44).

15. The magnetic disk assembly as claimed in claim 14, characterized in that said center hole (25) of said outer ring (24; 28) is inverted frustum shape, and
    said wedge ring (24; 28) includes a cylindrical inner surface (41) having substantially the same inner diameter as an outer diameter of said hub (21) and an outer peripheral surface (42) of an inverted frustum of which included angle is the same that of said inverted frustum center hole (25).

16. The magnetic disk assembly as claimed in claim 14, characterized in that

> said center hole (44) of said outer ring (34) is frustum shape, and
> said wedge ring (33) includes a cylindrical inner surface (41) having the same inner diameter as an outer diameter of said hub (12) and an outer peripheral surface (43) of a frustum of which included angle is the same as that of said frustum center hole (44).

17. The magnetic disk assembly as claimed in claim 15 or claim 16, characterized in that said wedge ring (23; 33) has a slit (26).

18. The magnetic disk assembly as claimed in claim 15 or claim 16, characterized in that complemental steps (27) for determining a quantity of squeezing of said wedge ring (23; 33) are formed on said outer peripheral surface of said wedge ring (23, 33) and said center hole of said outer ring (24; 28; 34).

19. The magnetic disk assembly as claimed in claim 15, characterized in that a surface of said outer ring (24; 28) in contact with the uppermost magnetic disk (1) of said plurality of magnetic disks (1) is chamfered.

20. The magnetic disk assembly as claimed in claim 15, characterized in that a surface of said peripheral wall of said outer ring (24; 28) in contact with the uppermost magnetic disk (1) of said plurality of magnetic disks (1) is rounded.

21. The magnetic disk assembly as claimed in claim 14, characterized in that said hub (21) includes, on an upper end surface, a plurality of recesses (37) into which a disassembling tool is insertable.

22. The magnetic disk assembly as claimed in claim 14, characterized in that said outer ring (24; 28; 34) includes, on an upper face, a plurality of recesses (38) into which a disassembling tool is insertable.

23. The magnetic disk assembly as claimed in claim 15, wherein an upper part of said wedge ring (23) is projected from an upper end surface of said hub (21).

24. The magnetic disk assembly as claimed in claim 16, characterized in that an inclination angle ($\theta$) of a side surface of said frustum relative to an axis of said hub and a frictional coefficient ($\mu$) between said wedge ring (33) and said outer ring (34) satisfy the relationship represented by the following equation,

$$\tan \theta \leq \mu$$

where $\theta$ ; inclination angle
$\mu$ ; frictional coefficient between the wedge ring and the outer ring.

25. A hard disk unit including a magnetic disk assembly according to one of claims 1, 8 and 14.

## FIG. 1

## FIG. 2

# FIG. 3

# FIG. 4

# FIG. 5

# FIG. 6

# FIG. 7

# FIG. 8

# FIG. 9

# FIG. 10

# FIG. 11

# FIG. 12

## FIG. 13

## FIG. 14

# FIG. 15

# FIG. 20

## FIG. 16

## FIG. 17

## FIG. 18

## FIG. 19

# FIG. 21

# FIG. 22